# FASCICULE DE BREVET EUROPEEN

(11) **EP 3 966 108 B1**
(45) Date de publication et mention de la délivrance du brevet: **11.12.2024**
(21) Numéro de dépôt: 20731931.0
(22) Date de dépôt: 05.05.2020
(51) Int. Cl.: B64C 27/04, B64D 27/02

(54) **SYSTEME DE PROPULSION HYBRIDE POUR AERONEF A DECOLLAGE ET ATTERRISSAGE VERTICAUX**
HYBRIDANTRIEBSSYSTEM FÜR SENKRECHT STARTENDES UND LANDENDES FLUGZEUG
HYBRID PROPULSION SYSTEM FOR VERTICAL TAKE-OFF AND LANDING AIRCRAFT

(30) Priorité: 06.05.2019 FR 1904715
(43) Date de publication de la demande: 16.03.2022
(73) Titulaire: Safran Helicopter Engines, 64510 Bordes (FR)
(72) Inventeur: THIRIET, Romain, Jean, Gilbert, 77550 MOISSY-CRAMAYEL (FR); BEDDOK, Stéphane, Meyer, 77550 MOISSY-CRAMAYEL (FR)
(74) Mandataire: Cabinet Beau de Loménie
(86) Numéro de dépôt international: PCT/FR2020/050747
(87) Numéro de publication internationale: WO 2020/225510

(56) Documents cités:
- WO-A1-2013/017680
- WO-A1-2016/020607
- WO-A1-2017/009037
- DE-A1- 102010 021 026
- US-A1- 2010 126 178

## Description

### Domaine Technique

L'invention concerne un système de propulsion hybride dans un aéronef à décollage et atterrissage verticaux et un aéronef comportant un tel système.

### Technique antérieure

Une architecture pour propulser un aéronef multi-rotors est connue de la demande FR3056555 et consiste à utiliser un turbomoteur, une génératrice associée à ce turbomoteur et pouvant recharger une batterie, et huit moteurs électriques actionnant huit hélices contrarotatives. Le dimensionnement du turbogénérateur (turbomoteur plus génératrice) et de la batterie est fait de telle sorte que chaque organe soit capable de fournir seul la puissance nécessaire à la propulsion de l'aéronef, en continu pour le turbogénérateur et sur quelques minutes pour la batterie.

Toutefois, les puissances nécessaires en croisière sur un tel aéronef multi-rotors étant de 30 à 40% plus basses que la puissance maximale demandée notamment au décollage, le turbogénérateur fonctionne donc durant cette phase de croisière loin de son optimum de consommation spécifique.

En outre, les performances du système propulsif sont très dépendantes des conditions ambiantes, de la vitesse d'avancement et de la masse embarquée de l'aéronef. De plus, outre le fait d'embarquer une masse conséquente de batteries, en cas de perte du turbogénérateur, cette architecture ne permet qu'un atterrissage d'urgence dans une zone accessible en temps limité à l'exclusion par exemple des zones de survol maritimes. DE 10 2010 021026 A1 divulgue un système d'entraînement hybride, comportant un module de production d'énergie, un moteur à combustion interne et un générateur entraîné par le moteur à combustion interne pour produire de l'électricité.

Il existe donc actuellement un besoin pour un nouveau système propulsif pour un aéronef multi-rotors, plus particulièrement pour les aéronefs à décollage et atterrissage verticaux (VTOL) à propulsion hybride.

### Exposé de l'invention

L'invention propose donc une architecture de propulsion de VTOL hybride qui pallie les inconvénients précédents, et permette notamment une augmentation de la versatilité ainsi qu'une optimisation de la production d'énergie en fonction des phases de vol de l'aéronef.

Pour ce faire, il est divulgué un système propulsif hybride pour un aéronef à décollage et atterrissage verticaux selon la revendication 1.

Ainsi, en proposant une architecture comportant plus d'un turbogénérateur, il est possible de réduire la perte de puissance apparente vue par l'aéronef en cas de perte totale d'un moteur thermique et de favoriser des combinaisons de puissances multiples.

Avantageusement, chacun des ensembles de stockage d'énergie électrique fournit une puissance déterminée apte à lisser l'alimentation de la pluralité de moteurs électriques lorsque cette pluralité de moteurs électriques est alimentée par les génératrices d'électricité et en ce qu'il comporte en outre un ensemble supplémentaire de stockage d'énergie électrique fournissant une puissance déterminée correspondant à la puissance délivrée par l'une des génératrices d'électricité et apte à être relié sélectivement à l'une quelconque des au moins deux branches énergétiques ou encore chacun des ensembles de stockage d'énergie électrique fournit une puissance déterminée correspondant à la puissance délivrée par la génératrice d'électricité du moteur thermique auquel cet ensemble de stockage d'énergie électrique est associé.

En mutualisant ainsi l'ensemble supplémentaire de stockage, il est possible de réduire la taille globale (et donc la masse) des ensembles de stockage d'énergie électrique, d'obtenir un mode de fonctionnement dit « économique » en phase de croisière et de permettre une réactivation en urgence de l'un quelconque des turbogénérateurs laissés dans un mode de veille.

Selon un mode de réalisation avantageux, la première génératrice d'électricité est apte à délivrer une puissance électrique de 400 Kw et la seconde génératrice d'électricité est apte à délivrer une puissance électrique de 300 Kw.

De préférence, l'ensemble supplémentaire de stockage d'énergie électrique fournit une puissance déterminée correspondant à la puissance délivrée par la génératrice d'électricité ayant la plus faible puissance.

Selon le mode de réalisation envisagé, les ensembles de stockage d'énergie électrique peuvent être rechargeables.

Avantageusement, l'unité de puissance et de distribution électrique comporte des convertisseurs alternatifs-continus pour convertir le courant alternatif délivré par les génératrices d'électricité en un courant continu, des convertisseurs continus-alternatif pour convertir le courant continu en un courant alternatif pour l'alimentation des moteurs électriques, et une matrice de contacteurs pour relier les génératrices d'électricité et/ou les ensembles de stockage d'énergie électrique aux propulseurs électriques en fonction de la phase de vol préétablie.

De préférence, le moteur thermique est une turbine à gaz ou tout autre moteur à combustion interne du type à pistons ou rotatif entrainant la génératrice d'électricité via une turbine libre ou liée et l'ensemble de stockage d'énergie électrique est une pile à combustible ou, lorsqu'il est rechargeable, une unité de batteries et/ou de supercondensateurs.

L'invention concerne également un aéronef VTOL hybride comportant un système propulsif hybride tel que précité.

### Brève description des dessins

D'autres caractéristiques et avantages de la présente invention ressortiront de la description détaillée faite ci-dessous, en référence aux figures suivantes dépourvues de tout caractère limitatif et sur lesquelles :
[Fig. 1] La figure 1 illustre de façon simplifiée une architecture de propulsion électrique d'un aéronef VTOL hybride,
[Fig. 2] La figure 2 illustre de façon simplifiée un exemple d'une architecture de propulsion électrique d'un aéronef VTOL hybride conforme à l'invention, et
[Fig. 3] La figure 3 montre un exemple de réalisation d'une matrice de contacteurs mise en oeuvre dans l'architecture de propulsion électrique d'un aéronef VTOL hybride conforme à l'invention.

### Description des modes de réalisation

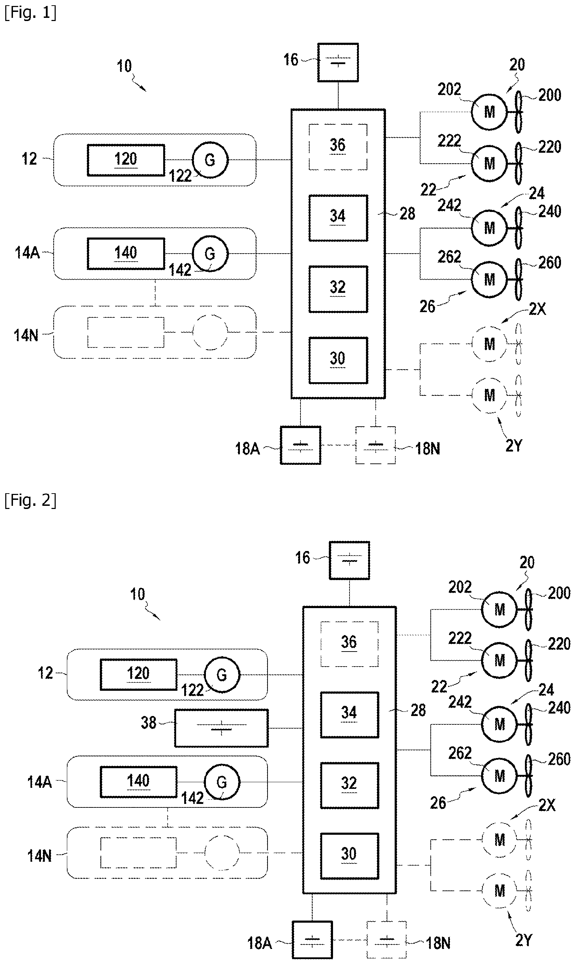

La figure 1 illustre très schématiquement un premier exemple d'un système de propulsion hybride 10 d'un aéronef à décollage et atterrissage verticaux (VTOL) non couverte par l'invention revendiquée et comportant N branches énergétiques, chaque branche énergétique comprenant une génératrice d'électricité à moteur thermique (ou turbogénérateur 12 ; 14A, 14N) et un ensemble de stockage d'énergie électrique 16 ; 18A, 18N, avantageusement rechargeables, ces N branches énergétiques alimentant sélectivement une pluralité de propulseurs électriques 20, 22, 24, 26, 2X, 2Y assurant la propulsion et/ou la sustentation de l'aéronef.

Le système préférentiel à deux ensembles propulsifs illustré en traits continus à la figure 1 définit ainsi deux branches énergétiques alimentant chacune tout ou partie des propulseurs électriques. Lorsque ces deux branches énergétiques sont ségréguées chacune alimente la moitié de ces propulseurs soit deux propulseurs électriques chacune dans la configuration illustrée à quatre propulseurs. Le moteur thermique 120, 140 alimenté par un carburant stocké dans un réservoir (non représenté) est par exemple une turbomachine (turbine à gaz ou tout autre moteur à combustion interne du type à pistons ou rotatif par exemple) et il entraine via une turbine libre ou liée une génératrice ou un démarreur/générateur électrique 122, 142. L'ensemble de stockage d'énergie électrique est par exemple une pile à combustible générant cette énergie à partir d'un carburant comme de l'hydrogène qui peut ou non servir à la propulsion ou, lorsqu'il est rechargeable, une unité de batteries et/ou de supercondensateurs 16, 18A. Les propulseurs électriques sont constitués chacun d'au moins un rotor 200, 220, 240, 260 mû par un moteur électrique 202, 222, 242, 262 éventuellement via un réducteur (non représenté).

Pour la simplification des dessins, à chaque turbogénérateur d'une branche énergétique est associé deux propulseurs électriques muni chacun d'un rotor, mais il est entendu que l'example s'applique sans distinction à un plus grand nombre de propulseurs, typiquement de deux à douze ou plus par exemple, le rotor pouvant être une simple hélice ou une double hélice coaxiale de type contrarotatif, comme dans l'art antérieur cité en préambule.

Ce système de propulsion hybride comporte en outre une unité de puissance et de distribution électrique 28 assurant l'alimentation de la pluralité de moteurs électriques 202, 222, 242, 262 à partir de la génératrice d'électricité 122, 142 et/ou de l'ensemble de stockage d'énergie électrique 16, 18A selon la phase de vol de l'aéronef concernée. Cette unité assure un découplage électrique entre les génératrices d'électricité et les moteurs électriques qui peuvent alors chacun tourner à leur vitesse de rotation nominale respective (les génératrices ayant en général des vitesses de rotation beaucoup plus élevées que celles des moteurs électriques qui peuvent en outre chacun tourner à des vitesses différentes) pour optimiser les performances de l'aéronef.

Aussi, classiquement, cette unité est pourvue de convertisseurs alternatifs-continus 30 pour convertir le courant alternatif délivré par les génératrices en un courant continu à destination du réseau électrique continu de l'aéronef, de convertisseurs continus-alternatifs 32 pour convertir le courant continu issu de ce réseau électrique continu en un courant alternatif pour l'alimentation des moteurs électriques, une matrice de contacteurs 34 aiguillant la source d'énergie la plus adaptée (génératrice ou ensemble de stockage d'énergie électrique ou les deux) à délivrer aux propulseurs électriques en fonction du plan de vol (cartographie des zones survolées, conditions environnementales), de la masse au décollage de l'aéronef (nombre de passagers et fret transporté) et de l'énergie disponible (ressource électrique et carburant y compris les réserves réglementaires).

De préférence, des convertisseurs continus-continus 36 peuvent être prévus pour permettre un rechargement des ensembles de stockage d'énergie électrique 16, 18A depuis les génératrices d'électricité, lorsque ceux-ci sont rechargeables (cette possibilité de recharge n'est toutefois pas envisageable avec une pile à combustible).

Avec cette architecture à deux turbogénérateurs pouvant si besoin assurer une ségrégation des deux branches énergétiques, il est possible de maintenir plus longtemps une puissance résiduelle, en cas de panne d'un des deux turbogénérateurs, l'ensemble de stockage d'énergie électrique associé à ce turbogénérateur en panne alimentant alors les propulseurs électriques de la branche énergétique correspondante. Ce maintien s'effectue toutefois au détriment d'une pénalité de masse et de consommation carburant par rapport à l'architecture à un seul turbogénérateur de l'art antérieur.

On notera que le moteur thermique peut avec cette architecture disposer alors d'un régime d'urgence comme le type OEI (pour One Engine Inoperative).

Un second exemple d'un système de propulsion hybride d'un aéronef VTOL hybride conforme à l'invention est illustré à la figure 2. Il se distingue du précédent en ce qu'il comporte en outre un ensemble supplémentaire de stockage d'énergie électrique 38 qui permet de suppléer un turbogénérateur en panne (faisant ainsi fonction de batterie mutuelle de secours) de l'une des N branches énergétiques, les ensembles de stockage d'énergie électrique 16 ; 18A, 18N associés à chacune des génératrices n'assurant plus alors qu'un simple lissage du courant pour les besoins en puissance.

Cette seconde architecture permet de réduire significativement la masse de l'ensemble de stockage d'énergie électrique. En effet, en considérant que chacune des génératrices délivre une puissance de 300kW, alors une batterie fournissant cette même puissance de 300kW est adaptée pour l'ensemble supplémentaire de stockage d'énergie électrique 38 et des batteries fournissant chacune une puissance de 50kW sont alors suffisantes pour chacun des ensembles de stockage d'énergie électrique 16 ; 18A, 18N. Cette configuration de stockage à N+1 batteries est à comparer avec celle résultant de la première architecture dans laquelle les ensembles de stockage d'énergie électrique 16 ; 18A, 18N sont avantageusement obtenus avec N batteries fournissant chacune une puissance de 300kW.

En outre, dans un domaine de vol et de vitesse limité, cette seconde architecture permet de fonctionner en croisière sur un seul turbogénérateur (mode dit « économique »), ce qui permet d'améliorer la fiabilité de l'aéronef ou de réaliser une économie de carburant supérieure à 10%.

En effet, le fonctionnement d'un tel mode économique permet de mettre en veille l'un des deux turbogénérateurs (par exemple le turbogénérateur 14A dans une configuration à deux turbogénérateurs 12, 14A). L'énergie nécessaire à la réactivation rapide en cas de perte de l'autre des deux turbogénérateurs, le turbogénérateur actif 12, est obtenue de cet ensemble supplémentaire de stockage d'énergie électrique 38 par une action appropriée sur la matrice de contacteurs 34 permettant tout d'abord d'isoler le turbogénérateur en panne 12, avant de redémarrer le turbogénérateur en veille 14A à partir de cet ensemble supplémentaire 38 pour, une fois ce dernier démarré, poursuivre la phase de vol avec le turbogénérateur ainsi réactivé 14A.

De plus, le recours à deux turbogénérateurs autorise une configuration asymétrique de ces deux turbogénérateurs afin de permettre une utilisation plus large dans le domaine de vol de ce mode économique.

Ainsi, le besoin de puissance en phase de croisière étant dépendant de différents paramètres (température et pression extérieure, masse de l'aéronef, vitesse...), il peut être supérieur à la puissance délivrée par un seul turbogénérateur. Il faut donc dans ce cas disposer d'un turbogénérateur plus puissant que l'autre afin de pouvoir proposer le mode économique dans l'ensemble des conditions de vol. Par exemple, si l'une des deux génératrices délivre une puissance de 300kW, la seconde peut alors délivrer une puissance de 400kW. Typiquement, un ratio de puissance entre les deux génératrices compris entre 1,2 et 1.4 apparait alors approprié de façon à permettre à la plus puissante de fournir à elle seule la puissance électrique requise par l'aéronef dans l'ensemble des conditions de vol.

Avantageusement, ce mode économique peut être réalisé sur l'un ou l'autre des deux turbogénérateurs (celui de plus forte ou de plus faible puissance) suivant les conditions de vol (masse au décollage, conditions ambiantes,...) et peut en outre évoluer en cours de mission. Dans ce cas, l'ensemble supplémentaire de stockage d'énergie électrique 38 sera capable de réactiver en urgence l'un ou l'autre des deux turbogénérateurs.

On notera que pour un aéronef VTOL hybride, l'activation de ce mode économique est effectuée de préférence en phase de croisière sous réserve de vérifier simultanément les deux conditions suivantes : une vitesse d'avancement > 100 kts et une puissance électrique requise par l'aéronef pouvant être fournie par un seul des deux turbogénérateurs (fonction des de la vitesse effective de croisière et des conditions ambiantes de vol (altitude, température...)).

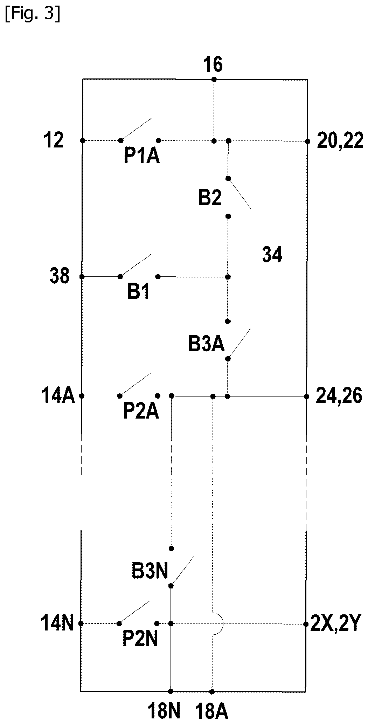

Un exemple de réalisation, qui ne saurait aucunement être considéré comme limitatif, de la matrice de contacteurs 34 mise en oeuvre dans l'architecture de propulsion électrique d'un aéronef VTOL hybride conforme à l'invention est illustré à la figure 3.

Une telle matrice comporte plusieurs contacteurs : N contacteurs P1A ; P2A et P2N sont destinés une fois ouvert à isoler chacun des turbogénérateurs 12 ; 14A et 14N et un autre B1 est destiné à faire de même avec l'ensemble supplémentaire de stockage d'énergie 38. Les autres contacteurs B2 ; B2A et B3N assurent la ségrégation des ensembles propulsifs en position d'ouverture (par exemple le turbogénérateur 12 alimente seul les propulseurs électriques 20, 22 et le turbogénérateur 14N alimente seul les propulseurs électriques 2X, 2Y) et, en position de fermeture, ils permettent le redémarrage de l'un sélectionné des turbogénérateurs à partir de l'ensemble supplémentaire de stockage d'énergie ou encore la substitution d'une branche énergétique par une autre en cas de perte du turbogénérateur de cette branche énergétique.

## Revendications

1. Système propulsif hybride (10) pour un aéronef à décollage et atterrissage verticaux (VTOL) comprenant :
deux branches énergétiques ayant chacune un moteur thermique (120, 140) entraînant une génératrice d'électricité (122, 142) et un ensemble de stockage d'énergie électrique (16 ; 18A, 18N) associé à chaque génératrice d'électricité, une pluralité de moteurs électriques (200, 220, 240, 260) actionnant une même pluralité de rotors (202, 222, 242, 262) assurant ensemble la propulsion et/ou la sustentation de l'aéronef VTOL hybride, et
une unité de puissance et de distribution électrique (28) assurant l'alimentation de la pluralité de moteurs électriques à partir des génératrices d'électricité et/ou des ensembles de stockage d'énergie électrique selon une phase de vol préétablie, les deux branches énergétiques ayant une configuration asymétrique et alimentent chacune sélectivement, par l'intermédiaire de l'unité de puissance et de distribution électrique (28), tout ou partie de la pluralité de moteurs électriques, le système **caractérisé**
**en ce que** les génératrices d'électricité des moteurs thermiques ont entre elles un rapport de puissance compris entre 1,2 et 1,4 de façon à permettre à la plus puissante de fournir à elle seule la puissance électrique requise par l'aéronef dans l'ensemble des conditions de vol et, en ce que le système propulsif hybride comporte en outre un ensemble supplémentaire de stockage d'énergie électrique (38) fournissant une puissance déterminée correspondant à la puissance délivrée par l'une des génératrices d'électricité et apte à réactiver en urgence l'ensemble comprenant un moteur thermique (120, 140) entraînant une génératrice d'électricité (122, 142) en veille.

2. Système propulsif hybride selon la revendication 1, **caractérisé en ce que** chacun des ensembles de stockage d'énergie électrique fournit une puissance déterminée apte à lisser l'alimentation de la pluralité de moteurs électriques lorsque cette pluralité de moteurs électriques est alimentée directement par les génératrices d'électricité et **en ce que** l'ensemble supplémentaire de stockage d'énergie (38) est apte à être relié sélectivement à l'une quelconque des deux branches énergétiques.

3. Système propulsif hybride selon la revendication 1 ou la revendication 2, **caractérisé en ce que** chacun des ensembles de stockage d'énergie électrique des deux branches énergétiques fournit une puissance de lissage de 50kW.

4. Système propulsif hybride selon la revendication 3, **caractérisé en ce que** la première génératrice d'électricité est apte à délivrer une puissance électrique de 400 kW et la seconde génératrice d'électricité est apte à délivrer une puissance électrique de 300 kW.

5. Système propulsif hybride selon la revendication 1, **caractérisé en ce que** chacun des ensembles de stockage d'énergie électrique fournit une puissance déterminée correspondant à la puissance délivrée par la génératrice d'électricité du moteur thermique auquel cet ensemble de stockage d'énergie électrique est associé.

6. Système propulsif hybride selon la revendication 2, **caractérisé en ce que** l'ensemble supplémentaire de stockage d'énergie électrique fournit une puissance déterminée correspondant à la puissance délivrée par la génératrice d'électricité ayant la plus faible puissance.

7. Système propulsif hybride selon l'une quelconque des revendications 1 à 6, **caractérisé en ce que** les ensembles de stockage d'énergie électrique sont rechargeables.

8. Système propulsif hybride selon l'une quelconque des revendications 1 à 7, **caractérisé en ce que** l'unité de puissance et de distribution électrique comporte des convertisseurs alternatifs-continus (30) pour convertir le courant alternatif délivré par les génératrices d'électricité en un courant continu, des convertisseurs continus-alternatifs (32) pour convertir le courant continu en un courant alternatif pour l'alimentation des moteurs électriques, et une matrice de contacteurs (34) pour relier les génératrices d'électricité et/ou les ensembles de stockage d'énergie électrique aux propulseurs électriques en fonction de la phase de vol préétablie.

9. Système propulsif hybride selon l'une quelconque des revendications 1 à 8, **caractérisé en ce que** le moteur thermique est une turbine à gaz ou tout autre moteur à combustion interne du type à pistons ou rotatif entraînant la génératrice d'électricité via une turbine libre ou liée.

10. Système propulsif hybride selon l'une quelconque des revendications 1 à 9, **caractérisé en ce que** l'ensemble de stockage d'énergie électrique est une pile à combustible ou, lorsqu'il est rechargeable, une unité de batteries et/ou de supercondensateurs.

11. Aéronef VTOL hybride comportant un système propulsif hybride selon l'une quelconque des revendications 1 à 10.

## Patentansprüche

1. Hybridantriebssystem (10) für ein senkrecht startendes und landendes (VTOL) Luftfahrzeug, umfassend:
zwei Energiezweige, die jeweils einen Verbrennungsmotor (120, 140), der einen Stromgenerator (122, 142) antreibt, und eine mit jedem Stromgenerator assoziierte Speicheranordnung elektrischer Energie (16; 18A, 18N) aufweisen, wobei eine Vielzahl von Elektromotoren (200, 220, 240, 260), die eine gleiche Vielzahl von Rotoren (202, 222, 242, 262) antreiben, gemeinsam den Antrieb und/oder den Auftrieb des Hybrid-VTOL-Luftfahrzeugs gewährleisten, und
eine elektrische Leistungs- und Verteilungseinheit (28), die die Versorgung der Vielzahl von Elektromotoren von den Stromgeneratoren und/oder den Speicheranordnungen elektrischer Energie gemäß einer voreingestellten Flugphase gewährleistet,
zwei Energiezweige, die eine asymmetrische Konfiguration aufweisen und jeweils selektiv über die elektrische Leistungs- und Verteilungseinheit (28) alle oder einen Teil der Vielzahl von Elektromotoren versorgen, wobei das System **dadurch gekennzeichnet ist, dass** die Stromgeneratoren der Verbrennungsmotoren untereinander ein Leistungsverhältnis aufweisen, das zwischen 1,2 und 1,4 liegt, um zu ermöglichen, dass nur der leistungsstärkste allein die von dem Luftfahrzeug unter allen Flugbedingungen benötigte elektrische Leistung bereitstellt, und dass das Hybridantriebssystem ferner eine zusätzliche Speicheranordnung elektrischer Energie (38) umfasst, die eine bestimmte Leistung bereitstellt, die der Leistung entspricht, die von einem der Stromgeneratoren bereitgestellt wird, und geeignet ist, um im Notfall die Anordnung in Standby, umfassend einen Verbrennungsmotor (120, 140), der einen Stromgenerator (122, 142) antreibt, zu reaktivieren.

2. Hybridantriebssystem nach Anspruch 1, **dadurch gekennzeichnet, dass** jede der Speicheranordnungen elektrischer Energie eine bestimmte Leistung bereitstellt, die geeignet ist, um die Versorgung der Vielzahl von Elektromotoren zu glätten, wenn diese Vielzahl von Elektromotoren direkt von den Stromgeneratoren versorgt wird, und dass die zusätzliche Speicheranordnung elektrischer Energie (38) geeignet ist, um selektiv mit einem beliebigen der zwei Energiezweige verbunden zu werden.

3. Hybridantriebssystem nach Anspruch 1 oder 2, **dadurch gekennzeichnet, dass** jede der Speicheranordnungen elektrischer Energie der zwei Energiezweige eine Glättungsleistung von 50 kW bereitstellt.

4. Hybridantriebssystem nach Anspruch 3, **dadurch gekennzeichnet, dass** der erste Stromgenerator geeignet ist, um eine elektrische Leistung von 400 kW bereitzustellen, und der zweite Stromgenerator geeignet ist, um eine elektrische Leistung von 300 kW bereitzustellen.

5. Hybridantriebssystem nach Anspruch 1, **dadurch gekennzeichnet, dass** jede der Speicheranordnungen elektrischer Energie eine bestimmte Leistung bereitstellt, die der Leistung entspricht, die von dem Stromgenerator des Verbrennungsmotors bereitgestellt wird, mit dem diese Speicheranordnung elektrischer Energie assoziiert ist.

6. Hybridantriebssystem nach Anspruch 2, **dadurch gekennzeichnet, dass** die zusätzliche Speicheranordnung elektrischer Energie eine bestimmte Leistung bereitstellt, die der Leistung entspricht, die von dem Stromgenerator mit der geringsten Leistung bereitgestellt wird.

7. Hybridantriebssystem nach einem der Ansprüche 1 bis 6, **dadurch gekennzeichnet, dass** die Speicheranordnungen elektrischer Energie wiederaufladbar sind.

8. Hybridantriebssystem nach einem der Ansprüche 1 bis 7, **dadurch gekennzeichnet, dass** die elektrische Leistungs- und Verteilungseinheit Wechselstrom-Gleichstrom-Wandler (30) zum Umwandeln des von den Stromgeneratoren bereitgestellten Wechselstroms in Gleichstrom, Gleichstrom-Wechselstrom-Wandler (32) zum Umwandeln des Gleichstroms in Wechselstrom zur Versorgung der Elektromotoren, und eine Matrix von Schaltschützen (34) zum Verbinden der Stromgeneratoren und/oder der Speicheranordnungen elektrischer Energie mit den elektrischen Triebwerken abhängig von der voreingestellten Flugphase umfasst.

9. Hybridantriebssystem nach einem der Ansprüche 1 bis 8, **dadurch gekennzeichnet, dass** der Verbrennungsmotor eine Gasturbine oder ein anderer Motor mit interner Verbrennung vom Typ Kolben- oder Wankelmotor ist, der den Stromgenerator über eine freie oder gebundene Turbine antreibt.

10. Hybridantriebssystem nach einem der Ansprüche 1 bis 9, **dadurch gekennzeichnet, dass** die Speicheranordnung elektrischer Energie eine Brennstoffzelle oder, wenn sie wiederaufladbar ist, eine Batterie- und/oder Superkondensatoreinheit ist.

11. Hybrid-VTOL-Luftfahrzeug, umfassend ein Hybridantriebssystem nach einem der Ansprüche 1 bis 10.

## Claims

1. A hybrid propulsion system (10) for a vertical take-off and landing (VTOL) aircraft comprising two energy branches, each with one combustion engine (120, 140) driving an electricity generator (122, 142), at least one electrical energy storage assembly (16; 18A, 18N) associated with each electricity generator and defining, with each electricity generator, an energy branch, a plurality of electric motors (200, 220, 240, 260) actuating a same plurality of rotors (202, 222, 242, 262) providing together the propulsion and/or the lift of the hybrid VTOL aircraft, and an electrical power and distribution unit (28) supplying power to the plurality of electric motors from the electricity generator and/or from the electrical energy storage assembly according to a pre-established flight phase, at least two energy branches having an asymmetric configuration and each supplying power selectively, by means of the electrical power and distribution unit (28), all or part of the plurality of electric motors, the system being **characterized in that** the electricity generators of the combustion engines have between them a power ratio comprised between 1.2 and 1.4 so as to allow the more powerful to supply alone the electrical power required for the aircraft in all flight conditions and, **in that** the system it further includes an additional electrical energy storage assembly (38) supplying a determined power corresponding to the power delivered by one of the electricity generators and able to reactivate in an emergency the assembly comprising a heat engine (120, 140) driving a standby electricity generator (122, 142).

2. The hybrid propulsion system according to claim 1, **characterized in that** each of the electrical energy storage assemblies supplies a determined power able to smooth the power supply to the plurality of electric motors when this plurality of electric motors is directly supplied with power by the electricity generators and **in that** the additional electrical energy storage assembly (38)is able to be selectively connected to any one of the at least two energy branches.

3. The hybrid propulsion system according to claim 1 or claim 2, **characterized in that** each of the electrical energy storage assemblies of the two energy branches provides a smoothing power of 50kW.

4. The hybrid propulsion system according to claim 3, **characterized in that** the first electricity generator is able to deliver an electrical power of 400 kW and the second electricity generator is able to deliver an electrical power of 300 kW.

5. The hybrid propulsion system according to claim 1, **characterized in that** each of the electrical energy storage assemblies supplies a determined power corresponding to the power delivered by the electricity generator of the combustion engine to which this electrical energy storage assembly is associated.

6. The hybrid propulsion system according to claim 2, **characterized in that** the additional electrical energy storage assembly supplies a determined power corresponding to the power delivered by the electricity generator having the lower power.

7. The hybrid propulsion system according to any one of claims 1 to 6, **characterized in that** the electrical energy storage assemblies are rechargeable.

8. The hybrid propulsion system according to any one of claims 1 to 7, **characterized in that** the electrical power and distribution unit includes AC-DC converters (30) for converting the alternating current delivered by the electricity generators into direct current, DC-AC converters (32) for converting direct current into alternating current for supplying power to the electric motors, and a contactor array (34) for connecting the electricity generators and/or the electrical energy storage assemblies to the electric thrusters according to the pre-established flight phase.

9. The hybrid propulsion system according to any one of claims 1 to 8, **characterized in that** the combustion engine is a gas turbine or any other internal combustion engine of the piston or rotary type driving the electricity generator via a free or linked turbine.

10. The hybrid propulsion system according to any one of claims 1 to 9, **characterized in that** the electrical energy storage assembly is a fuel battery or, if it is rechargeable, a battery and/or super-capacitor unit.

11. A hybrid VTOL aircraft including a hybrid propulsion system according to any one of claims 1 to 10.
